# EUROPEAN PATENT APPLICATION

(11) **EP 1 513 140 A2**
(43) Date of publication of application: **09.03.2005**
(21) Application number: 04255274.5
(22) Date of filing: 01.09.2004
(51) Int. Cl.: G11B 7/007, G11B 7/24

(54) **Optical recording medium**

(30) Priority: 01.09.2003 JP 2003308844; 12.07.2004 JP 2004204672
(71) Applicant: Fuji Photo Film Co., Ltd., Minami-Ashigara-shi, Kanagawa (JP)
(72) Inventor: Shibata, Michihiro, Odawara-shi, Kanagawa (JP)
(74) Representative: Stevens, Jason Paul

(57) **Abstract**

An optical recording medium including: a substrate having a surface on which grooves are concentrically or spirally formed, and a recording layer which is formed on the surface of the substrate and contains a dye, the recording layer being irradiated with a laser beam to record or reproduce information, wherein a region of the substrate corresponding to a recording pit forming region is transformed into a convex form or a concave form by irradiating the recording layer with the laser beam to form the recording pit at the time of recording the information, a maximum height of a convex portion is in the range of from 3 nm to 15 nm or a maximum depth of a concave portion is in the range of from 3 nm to 15 nm, and a void is generated in the recording pit forming region of the recording layer.

## Description

### BACKGROUND OF THE INVENTION

### Field of the invention

The present invention relates to an optical recording medium, and more particularly, an optical recording medium which has a recording layer containing a dye and can record in high density and at high speed.

### Description of the Related Art

Conventionally, an optical recording medium (optical disk), which is capable of recording information only once by using a laser beam, has been known. Such optical disk is also referred to as write-once CD (CD-R), and is typically structured so that an organic dye recording layer, a reflective layer made of metals such as gold, and a resin protective layer are stacked in this order on a transparent disk-shaped substrate. Information is then recorded by irradiating a near-infrared laser beam (normally, a laser beam having a wavelength in the vicinity of 780 nm) onto the CD-R. The irradiated portion of the recording layer absorbs the light, and the temperature of the irradiated region rises to cause a physical or chemical change (for example, the formation of pits) in the optical characteristics of the portion, and information is thus recorded. Moreover, information reading (reproduction) is also carried out by irradiating on the CD-R with a laser beam having the same wavelength as that of the laser beam used to record the information. Namely, reproduction of the information is carried out by detecting the differences in the reflectivity in the recording layer between a portion having changed optical characteristics (recorded portion) and a portion having unchanged optical characteristics (unrecorded portion).

In recent years, there has been an increased demand for optical recording media having higher recording density. For the demand, an optical disk referred to as a write-once digital-versatile-disk a so-called (DVD-R) has been proposed. The DVD-R has guide grooves (pre-grooves) for tracking the irradiated laser beam, having a narrow groove width of not more than half of that of the CD-R (0.74 to 0.8 µm). The DVD-R has a formation which is obtained by bonding two disks in which the recording layer containing the dye, the reflective layer normally formed on the recording layer and if necessary the protective layer are formed on a disk-shaped transparent substrate to each other, or by bonding such a disk and a disk-shaped protective substrate having the same shape as the disk with their respective recording layers facing inward using the adhesive. The information recording and reproducing processes are carried out on DVD-R by irradiating a visible laser beam (normally, a laser beam having a wavelength ranging from 630 to 680 nm) thereto, so that recording at a higher density than a CD-R is possible.

As the DVD-R, the request for the high speed recording recently increases. Therefore, the optical recording medium adapted for the high speed recording has been proposed. For instance, an optical recording medium which suppresses heat interference in the condition that the linear velocity of recording is 10.5 m/s (corresponding to three times in the DVD-R), the recording power is 14 mW or less and asymmetry β is 0% or less is proposed in Japanese Patent Application Laid-Open (JP-A) No. 2002-260227. However, with respect to the optical recording medium, a problem exists in that the jitter is worse by causing the heat interference when the linear velocity of recording exceeds 10.5 m/s.

An optical recording medium having a recording layer obtained by mixing a dye having the absorption maximum in the wavelength in the range of from 350 to 630 nm and another dye having the absorption maximum in the wavelength in the range of from 630 to 900 nm for the improvement of the high speed recording characteristic is proposed in JP-A No. 2003-34078. However, with respect to the optical recording medium, a problem exists in that the jitter is worse by causing the heat interference during the high speed recording.

### SUMMARY OF THE INVENTION

It is an object of the present invention to provide an optical recording medium which can ensure low heat interference during the high speed recording and exhibit satisfactory jitter.

A first aspect of the invention is to provide an optical recording medium comprising: a substrate having a surface on which one or more grooves are concentrically or spirally formed; and a recording layer which is formed on the surface of the substrate and contains a dye, the recording layer being irradiated with a laser beam to record or reproduce information, wherein a region of the substrate corresponding to a recording pit forming region is transformed into a convex form or a concave form by irradiating the recording layer with the laser beam to form the recording pit at the time of recording the information, a maximum height of a convex portion is in the range of from 3 nm to 15 nm or a maximum depth of a concave portion is in the range of from 3 nm to 15 nm, and a void is generated in the recording pit forming region of the recording layer.

According to the invention, an optical recording medium which can ensure low heat interference during the high speed recording and exhibit satisfactory jitter can be provided.

### DETAILED DESCRIPTION OF THE INVENTION

The optical recording medium of the present invention comprising: a substrate having a surface on which one or more grooves are concentrically or spirally formed; and a recording layer which is formed on the surface of the substrate and contains a dye, the recording layer being irradiated with a laser beam to record or reproduce information, wherein a region of the substrate corresponding to a recording pit forming region is transformed into a convex form or a concave form by irradiating the recording layer with the laser beam to form the recording pit at the time of recording the information, a maximum height of a convex portion is in the range of from 3 nm to 15 nm or a maximum depth of a concave portion is in the range of from 3 nm to 15 nm, and a void is generated in the recording pit forming region of the recording layer

The optical recording medium of the invention will be described below.

### <Optical Recording Medium>

The optical recording medium of the invention is a write-once optical recording medium such as DVD-R which can record and reproduce information as one embodiment thereof. Moreover, the optical recording medium of the invention may be a HD DVD-R which has the same layer configuration as that of DVD-R and is recorded and reproduced by use of a blue-violet laser beam.

The optical recording medium such as the DVD-R is composed by joining two substrates (hereinafter, may be referred to as "first substrate" and "second substrate" respectively). A recording layer is at least formed on the first substrate. It is preferable that a reflective layer and a protective layer or the like are properly formed in addition to the recording layer. The recording layer and the reflective layer or the like may be sequentially formed on the second substrate as well as the first substrate. The second substrate may have no layer as a so-called protective substrate (dummy substrate).

Hereinafter, the substrate and the layers of the optical recording medium of the invention will be described as an example of the optical recording medium such as the DVD-R. The layer configuration and the material or the like should be a mere exemplary. The invention is not limited thereto.

### [Substrate]

As the substrate, a desired material may be properly selected from various kinds of materials which are conventionally used as substrate materials for optical recording media.

More specifically, examples thereof include: glass; acrylic resins such as polycarbonate and polymethyl methacrylate; vinyl chloride resins such as polyvinyl chloride and vinyl chloride copolymer; epoxy resins; amorphous polyolefin; polyester; metals such as aluminum. These may be used in combination.

Among the aforementioned materials, polycarbonate and amorphous polyolefin are preferably used from the viewpoint of humidity resistance, dimensional stability and low price or the like, and polycarbonate is particularly preferable. The thickness of the substrate is preferably in the range of from 0.5 to 1.4 mm.

Guide grooves for tracking and irregularities (groove and land) representing information such as address signals are concentrically or spirally formed on the substrate. The track pitch of the grooves is preferably in the range of from 0.4 to 0.9 µm, more preferably 0.45 to 0.85 µm, and most preferably 0.50 to 0.80 µm. Moreover, the depth of the grooves (groove depth) is preferably in the range of from 50 to 150 nm, more preferably 80 to 135 nm, and most preferably 100 to 130 nm. Furthermore, the half value width of the grooves is preferably in the range of from 200 to 400 nm, more preferably 230 to 380 nm, and most preferably 250 to 350 nm.

A land prepits (LPP) arranged according to the rule usually predetermined are formed on the regions which is called lands between the grooves. The acquisition of address information and positioning at the data recording are performed by detecting the position of the LPP.

An undercoat layer may be formed on the substrate surface on the side on which a recording layer is formed for the purposes of improving the flatness, enhancing the adhesive strength, preventing deterioration of the recording layer. As the material of the undercoat layer, for example, the following materials may be used: polymer materials such as polymethyl methacrylate, copolymer of acrylic acid-methacrylic acid, copolymer of styrene-maleic anhydride, polyvinyl alcohol, N-methylol acryl amide, copolymer of styrene-vinyltoluene, chlorosulfonated polyethylene, nitrocellulose, polyvinyl chloride, chlorinated polyolefin, polyester, polyimide, copolymer of vinyl acetate-vinyl chloride, copolymer of ethylene-vinyl acetate, polyethylene, polypropylene and polycarbonate; and surface modifying agent such as silane coupling agents. After the aforementioned material has been dissolved or dispersed in an appropriate solvent to prepare coating solution, the undercoat layer is formed by applying this coating solution onto a substrate surface by using a spin coating method, a dip coating method, an extrusion coating method or the like. The layer thickness of the undercoat layer is generally set in the range of from 0.005 to 20 µm, and more preferably a range of 0.01 to 10 µm.

### [Recording layer]

In the DVD-R, the dye to be used in the recording layer is not particularly limited, and examples of the applicable dye include: cyanine dye, phthalocyanine dye, imidazoquinoxaline dye, pyrylium dye, thiopyrylium dye, azulenium dye, squarylium dye, metal complex salt dye such as Ni and Cr, naphthoquinone dye, anthraquinone dye, indophenol dye, indoaniline dye, triphenylmethane dye, merocyanine dye, oxanol dye, aminium dye, diimmonium dye and nitroso compounds. Among these dyes, cyanine dye, phthalocyanine dye, azulenium dye, squarylium dye, oxanol dye and imidazoquinoxaline dye are preferably used.

As the solvent for the coating solution used for forming the recording layer, esters such as butyl acetate and cerosolve acetate; ketones such as methyl ethyl ketone, cyclohexanone and methyl isobutyl ketone; chlorinated hydrocarbons such as dichloromethane, 1,2-dichloromethane and chloroform; amides such as dimethylformamide; hydrocarbons such as cyclohexane; ethers such as tetrahydrofran, ethyl ether and dioxane; alcohols such as ethanol, n-propanol, isopropanol, n-butanol and diacetone alcohol; fluorinated solvents such as 2,2,3,3-tetrafluoropronanol; and glycol ethers such as ethylene glycol monomethyl ether, ethylene glycol monoethyl ether and propylene glycol monomethyl ether. Only one of these materials may be used or two or more kinds of these may be used in combination, by taking the dissolving property of the dye to be used into consideration. Preferably, a fluorinated solvent such as 2,2,3,3-tetrafluoropropanol is used. A fading preventing agent and a binder may be desirably added to the coating solution, and any additive such as an antioxidant, a UV absorbent, a plasticizer and a lubricant may be added according to the objectives.

Typical examples of the fading preventing agents include: nitroso compounds, metal complexes, diimmonium salt and aminium salt. These examples are described, for example, in JP-A Nos. 2-300288, 3-224793 and 4-146189.

As the binder, examples thereof include: natural organic polymer substances such as gelatin, cellulose derivatives, dextran, rosin and rubber; and synthetic organic polymers including hydrocarbon resins such as polyethylene, polypropylene, polystyrene and polyisobutylene, vinyl resins such as polyvinyl chloride, polyvinylidene chloride, and copolymer of vinyl chloride-vinyl acetate, acrylic resins such as polymethyl acrylate and polymethyl methacrylate, and polyvinyl alcohol, chlorinated polyethylene, epoxy resin, butyral resin, rubber derivatives and initial condensates of thermosetting resins such as phenolformaldehyde resin. When a binder is used in the recording layer, the amount of the binder is generally in the range of from 0.2 to 20 parts by mass with respect to 100 parts by mass of the dye, preferably 0.5 to 10 parts by mass, and more preferably 1 to 5 parts by mass. The concentration of the dye in the coating solution prepared in this manner is generally set in the range of from 0.01 to 10% by mass, and more preferably in the range of from 0.1 to 5% by mass.

As the aforementioned solvent, only one of these materials or two or more kinds of these may be used in combination, by taking the dissolving property of the dye to be used into consideration.

As the coating method, examples thereof include a spray method, a spin coating method, a dipping method, a roll coating method, a blade coating method, a doctor roll method and a screen printing method or the like. The recording layer may be a single layer or a laminated layer. The thickness of the recording layer is generally set in the range of from 20 to 500 nm, preferably in the range of from 30 to 300 nm, and more preferably in the range of from 50 to 200 nm.

Moreover, with respect to the coating temperature, a temperature range of 23 to 50°C is used without causing any problems; however, the range is preferably in the range of from 24 to 40°C and more preferably 25 to 37°C.

Any fading preventing agent may be added to the recording layer in order to improve the light fastness of the recording layer.

As the fading preventing agent, a singlet oxygen quencher is generally used. As the singlet oxygen quencher, those already disklosed in publications such as known patent specifications may be used.

Specific examples thereof include those disklosed in JP-A Nos. 58-175693, 59-81194, 60-18387, 60-19586, 60-19587, 60-35054, 60-36190, 60-36191, 60-44554, 60-44555, 60-44389, 60-44390, 60-54892, 60-47069, 63-209995 and 4-25492, Japanese Patent Application Publication (JP-B) Nos. 1-38680 and 6-26028, German Patent No. 350,399, and those disklosed on page 1141, in October Issue of Journal of Japan Chemical Society, 1992.

When the fading preventing agent such as the singlet oxygen quencher is applied, the amount thereof is normally set in the range of from 0.1 to 50% by mass with respect to the amount of the recording compound, preferably, in the range of from 0.5 to 45% by mass, more preferably in the range of from 3 to 40% by mass, and most preferably in the range of from 5 to 25% by mass.

### [Reflective Layer]

A reflective layer is provided on the recording layer particularly for the purpose of improving a reflectivity at reproduction of information. A light reflecting material which is a material for a reflective layer is a material having a high reflectivity for the laser beam. Examples thereof include metals and semi-metals such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn, Bi, Nd, and stainless steel. Among them, preferable are Cr, Ni, Pt, Cu, Ag, Au, Al and stainless steel. These materials may be used alone or by combining two or more. Alternatively, they may be used as an alloy. Particularly preferable are Au, Ag and an alloy thereof. The reflective layer may be formed on the recording layer, for example, by deposition, sputtering or ion plating of the light reflecting material. A thickness of a reflective layer is generally in the range of from 10 to 800 nm, preferably in the range of from 20 to 500 nm, further preferably in the range of from 50 to 300 nm.

### [Adhesive layer]

The optical recording medium of the invention may have an adhesive layer. The adhesive layer is formed between the reflective layer and a protective layer or a protective substrate.

As an adhesive composing the adhesive layer, an ultraviolet-curable resin is preferable, and in order to prevent warpage of a disk, a resin having a small curing shrinking rate is preferable. Examples of he ultraviolet-curable resin include a UV-curable resin (UV-curable adhesive) such as "SD-640 (trade name)", "SD-347 (trade name)" or the like manufactured by DAINIPPON INK AND CHEMICALS, INCORPORATED. In order to endow with the elasticity, a thickness of an adhesive layer is preferably in the range of from 1 to 1000 µm, more preferably in the range of from 5 to 500 µm, particularly preferably in the range of from 10 to 100 µm.

The other examples of the adhesives composing the adhesive layer include a resin which can be cured by irradiation of radiation, and has a radiation-functional double bond of two or more functions in one molecule. The examples of the adhesives include acrylic esters, acrylamides, methacrylic esters, methacrylic amides, allylic compounds, vinylethers and vinyl esters. An acrylate or methacrylate compound having two or more functions is preferable.

The specific examples of acrylate or methacrylate compounds having two functions include those obtained by adding an acrylic acid or a mathacrylic acid to an aliphatic diol represented by ethylene glycol diacrylate, polypropylene glycol diacrylate, butanediol diacrylate, hexanediol diacrylate, diethylene glycol diacrylate, triethylene glycol diacrylate, tetraethylene glycol diacrylate, neopenthyl glycol diacrylate, tripropylene glycol diacrylate, ethylene glycol dimethacrylate, propylene glycol dimethacrylate, butanediol dimethacrylate, hexanediol dimethacrylate, diethylene glycol dimethacrylate, triethylene glycol dimethacrylate, tetraethylene glycol dimethacrylate, neopenthyl glycol dimethacrylate, and tripropylene glycol dimethacrylate or the like.

A polyether acrylate or a polyether methacrylate obtained by adding an acrylic acid or a mathacrylic acid to a polyether polyol such as polyethylene glycol, polypropylene glycol and polytetramethylene glycol; a polyester acrylate or a polyester methacrylate obtained by adding an acrylic acid or a mathacrylic acid to a polyester polyol derived from a known dibasic acid or a glycol may be also used.

Furthermore, a polyurethane acrylate or a polyurethane methacrylate obtained by adding an acrylic acid or a mathacrylic acid to polyurethane obtained by reacting a known polyol or a known diol with a polyisocyanate may be used.

Those obtained by adding an acrylic acid or a mathacrylic acid to a bisphenol A, a bisphenol F, a hydrogenated bisphenol A, a hydrogenated bisphenol F and an alkylene oxide adduct thereof; and those having a cyclic structure such as an isocyanuric acid-alkylene oxide-modified diacrylate, an isocyanuric acid-alkylene oxide-modified dimethacrylate, tricyclo decane dimethanol diacrylate and tricyclo decane dimethanol dimethacrylate may be also used.

As the radiation, an electron beam and ultraviolet rays may be used. The use of the ultraviolet rays requires the addition of a photopolymerization initiator to the following compounds. As the photopolymerization initiator, an aromatic ketone is used. Though the aromatic ketone is not particularly limited, the aromatic ketone preferably has a relatively large extinction coefficient in the wavelength of 254, 313 and 865 nm in which the light spectrum of a mercury lamp usually used as an ultraviolet-ray radiation light source is caused. Typical examples of the aromatic ketones include acetophenone, benzophenone, benzoin ethyl ether, benzyl methyl ketal, benzyl ethyl ketal, benzoin isobutyl ketone, hydroxy dimethylphenylketone, 1-hydroxy cyclohexyl phenyl ketone, 2-2diethoxyacetophenone and Michler's ketone, and any type of aromatic ketones may be used. The mixing ratio of the aromatic ketone is in the range of from 0.5 to 20 parts by mass with respect to 100 parts by mass of the ultraviolet-curable resin, preferably 2 to 15 parts by mass, and more preferably 3 to 10 parts by mass. An ultraviolet curable adhesive containing a photoinitiator previously is marketed, and the ultraviolet curable adhesive may be used. As the ultraviolet-ray light source, a mercury lamp or a metal halide lamp is used. The lamp of 20 to 300 W/cm is used, and irradiates for 0.1 to 20 seconds. It is preferable that the distance between the substrate and the lamp is generally in the range of from 1 to 30 cm.

A scanning type, a double scanning type and a curtain beam type electron beam accelerators may be adopted. The curtain beam type electron beam accelerator which is relatively inexpensive and can produce a high output is preferable. As the electron beam characteristic, the accelerated voltage is in the range of from 100 to 1000 kV, and preferably 150 to 300 kV. The absorbed dose is in the range of from 0.5 to 20 Mrad, and preferably 1 to 10 Mrad. The accelerated voltage of 10 kV or less may cause the lack of the transmitted quantity of energy. The accelerated voltage exceeding 1000 kV may cause the decrease of the energy efficiency used in polymerization, and thereby it is unpreferable in the cost.

### [Protective layer, protective substrate]

A protective layer or a protective substrate prevents penetration of moisture and occurrence of defects. As the material which composes the protective layer, an ultraviolet-curable resin, a visible light curing resin, a thermosetting resin and silicon dioxide or the like are preferably used, and particularly preferably the ultraviolet-curable resin. Examples of such the ultraviolet -curable resin include an ultraviolet-curable resin such as "SD-640 (trade name)" or the like manufactured by DAINIPPON INK AND CHEMICALS, INCORPORATED. Moreover, "SD-347" (trade name, manufactured by DAINIPPON INK AND CHEMICALS, INCORPORATED), "SD-694" (trade name, manufactured by DAINIPPON INK AND CHEMICALS, INCORPORATED), and "SKCD1051" (trade name, manufactured by SKC Co., Ltd.) or the like may be used. The thickness of the protecting layer is in the range of from 1 to 200 µm, preferably in the range of from 5 to 150 µm.

Moreover, when the protective layer is used as a laser optical path, transparency is required for the protective layer. "Transparent" means that a material is transparent so that the light passes to the recording light and the reproducing light (transmittance: 90% or more).

The protective layer can be formed by the spin coating method. The revolution of the spin coating is preferably in the range of from 50 to 8000 rpm from the viewpoint of forming the uniform layer, and more preferably 100 to 5000 rpm.

When the ultraviolet-curable resin is used for the protective layer, the protective layer is irradiated with ultraviolet rays using a ultraviolet irradiation lamp (metal halide lamp) after the protective layer is formed by the spin coating method, and the ultraviolet-curable resin is cured.

The resin may be properly left in a predetermined period of time before the resin is cured so as to eliminate the thickness nonuniformity of the protective layer to be formed.

In the DVD-R, an adhesive layer made of the ultraviolet-curable resin or the like and the substrate (thickness: about 0.6 mm, the material is the same as that of the substrate) as the protective substrate are laminated in place of the protective layer.

That is, after the reflective layer is formed, an ultraviolet-curable resin (SD-640, SD-661 and SD-694 or the like manufactured by DAINIPPON INK AND CHEMICALS, INCORPORATED.) is diskharged on a disk. For instance, a polycarbonate substrate (thickness: 0.6 mm) as the protective substrate is put on the disk. After the ultraviolet-curable resin is shaken off at high rotation as well as the spin coat, the substrate is irradiated with ultraviolet rays, and the disk and substrate are bonded by curing the ultraviolet-curable resin. The thickness of the adhesive layer is in the range of from 20 to 60 µm.

### <Optical Information Recording Method>

The information recording in the optical recording medium of the invention is performed as follows. First, while the unrecorded optical recording medium of the invention is rotated at a prescribed linear velocity, the optical recording medium is irradiated with light for recording such as a laser beam through an objective lens. The dye of the recording layer absorbs the irradiation light, and the temperature of the recording layer increases locally to form recording pits. Information is recorded by the change of the optical characteristic of the recording layer.

The recording waveform of the laser beam may be a pulse train and one pulse when one pit is formed. The ratio to the length (length of the pit) to be actually recorded is important.

The pulse width of the laser beam is preferably in the range of from 20 to 95% with respect to the length to be actually recorded, more preferably 30 to 90%, and particularly preferably 35 to 85%. Herein, when the recording waveform is a pulse train, it is indicated that the sum of the pulse train is in the above-described range.

The power of the laser beam is made different in the linear velocity of recording. For instance, when the linear velocity is 14 m/s, the power of the laser beam is preferably in the range of from 15.0 to 20.0 mW, more preferably 16.5 to 19.5 mW, and particularly preferably 17.0 to 19.0 mW. The preferable range of the power of the laser beam is respectively increased 2^{2/1} times when the linear velocity is increased twice.

A numerical aperture (NA) of an objective lens used for a pickup is preferably 0.62 or more, and more preferably 0.65 or more so as to increase the recording density.

In the invention, with respect to the recording light, a semiconductor laser having an oscillation wavelength of 300 to 700 nm may be used.

In the optical recording medium of the invention, the region of the substrate corresponding to a recording pit forming region is transformed into a convex form or a concave form by irradiating the recording layer with the laser beam to form the recording pit at the time of recording the information, wherein the maximum height of a convex portion is in the range of from 3 nm to 15 nm or the maximum depth of a concave portion is in the range of from 3 nm to 15 nm, and wherein the void is generated in the recording pit forming region of the recording layer. In the optical recording medium of the invention, a large phase difference is caused by the decrease in the refractive index due to the void (for example, spherical or broad bean-shaped) caused in the recording pit forming region of the recording layer. Therefore, enough modulation degree can be obtained if the thickness of the recording layer in the grooves (groove portion) of the substrate is set to as thin as 50 to 150 nm. Particularly, heat interference is low during the high speed recording in which the linear velocity is 28 m/s or more (corresponding to eight-fold speed in the DVD-R), and satisfactory jitter can be obtained.

When the recording layer is irradiated with the laser beam, the dye of the recording layer generates heat, and heats generation influences the substrate. Therefore, the surface of the substrate on the recording layer side is transformed. The substrate may be transformed into a convex form or a concave form. The maximum height means the maximum height of the convex portion when the substrate is transformed into the convex form. The maximum depth means the maximum depth of the concave portion when the substrate is transformed into the concave form. The maximum height or the maximum depth is preferably in the range of from 4 to 12 nm, and more preferably 5 to 10 nm.

The transformation (maximum height or maximum depth) of the region of the substrate corresponding to the recording pit forming region can be set within the range, and the void in the recording pit forming region of the recording layer can be caused by properly selecting the dye used for the recording layer. As the dye concerned, the dye which has a small calorific value (approximately 500 J/g or less) and generates a gas at the time of decomposition thereof is preferable. Specifically, it is preferable that the dye contains no substituent having large calorific value such as a nitro group and no perchlorate ion or the like. However, if a dye has small calorific value even if it is the dye containing a nitro group, it is applicable to this invention.

More specifically, it is desirable to use a dimer type oxanol dye as the dye used for the recording layer. The modulation degree can be enlarged by using the dimer type oxanol dye in a low-speed recording (one-fold speed recording).

It is desirable that the dimer type oxanol dye is a compound represented by the following formula (1):. 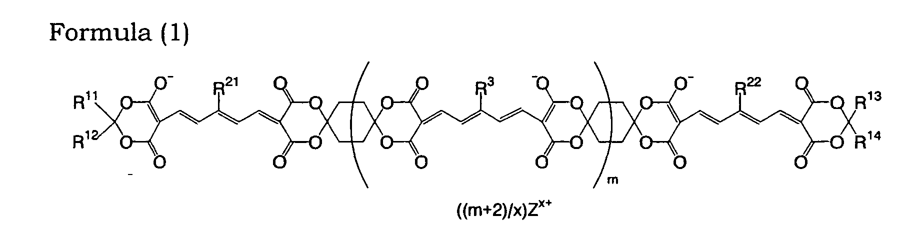 wherein, R¹¹, R¹², R¹³ and R¹⁴ each independently represent any one of a hydrogen atom, a substituted or unsubstituted alkyl group, a substituted or unsubstituted aryl group, and a substituted or unsubstituted heterocyclic group; R²¹, R²² and R³ each independently represent any one of a hydrogen atom, a substituted or unsubstituted alkyl group, a substituted or unsubstituted alkoxy group, a substituted or unsubstituted aryl group, a substituted or unsubstituted aryloxy group, a substituted or unsubstituted heterocyclic group, a halogen atom, a carboxyl group, a substituted or unsubstituted alkoxycarbonyl group, a cyano group, a substituted or unsubstituted acyl group, a substituted or unsubstituted carbamoyl group, an amino group, a substituted amino group, a sulfo group, a hydroxyl group, a nitro group, a substituted or unsubstituted alkyl sulfonyl amino group, a substituted or unsubstituted aryl sulfonyl amino group, a substituted or unsubstituted carbamoyl amino group, a substituted or unsubstituted alkyl sulfonyl group, a substituted or unsubstituted aryl sulfonyl group, a substituted or unsubstituted alkyl sulfinyl group, a substituted or unsubstituted aryl sulfinyl group, and a substituted or unsubstituted sulfamoyl group; m represents an integer of 0 or more; when m is 2 or more, plural R³s may be same or different; Z^{x+} represents a cation; and x represents an integer of 1 or more.

R¹¹, R¹², R¹³ and R¹⁴ of the formula (1) each independently represent any one of a hydrogen atom, a substituted or unsubstituted alkyl group, a substituted or unsubstituted aryl group, and a substituted or unsubstituted heterocyclic group. Examples of the substituted or unsubstituted alkyl groups represented by R¹¹, R¹², R¹³ and R¹⁴ include an alkyl group (for example, methyl, ethyl, propyl, butyl, i-butyl, t-butyl, i-amyl, cyclo propyl, cyclo hexyl, benzyl and phenethyl) having 1 to 20 carbon atoms. When R¹¹, R¹², R¹³ and R¹⁴ represent each an alkyl group, they may be connected each other to form carbon rings (for example, cyclo propyl, cyclo butyl, cyclo pentyl, cyclo hexyl, 2-methyl cyclo hexyl, cyclo heptyl, and cyclo octyl or the like) or a heterocycle (for example, piperidine, chromanyl, and morpholine or the like). The alkyl group represented by R¹¹, R¹², R¹³ and R¹⁴ is preferably a chain alkyl group or circular alkyl group having 1 to 8 carbon atoms, and most preferably a chain (straight chain or branched chain) alkyl group having 1 to 5 carbon atoms, a circular alkyl group (preferably a cyclohexyl ring) in which R¹¹ and R¹² form a ring by being bonded to each other, and R¹³ and R¹⁴ form a ring by being bonded to each other, and which has 1 to 8 carbon atoms, and a substituted alkyl group having 1 to 20 carbon atoms (for example, benzyl and phenethyl).

Examples of the substituted or unsubstituted aryl groups represented by R¹¹, R¹², R¹³ and R¹⁴ of the formula (1) include an aryl group (for example, phenyl and naphthyl) having 6 to 20 carbon atoms. Preferable examples of the aryl groups represented by R¹¹, R¹², R¹³ and R¹⁴ include an aryl group having 6 to 10 carbon atoms.

The substituted or unsubstituted heterocyclic group represented by R¹¹, R¹², R¹³ and R¹⁴ of the formula (1) is a 5- to 6-membered saturated or unsaturated heterocyclic group composed by carbon atoms, nitrogen atoms, oxygen atoms, or sulfur atoms. Examples thereof include a pyridyl group, a pyrimidyl group, a pyridazyl group, a piperidyl group, a triagile group, a pyrrolyl group, an imidazolyl group, a triazolyl group, a furanyl group, a thiophenyl group, a thiazolyl group, an oxazolyl group, an isothiazolyl group, an isoxazolyl group. It also can be what they form such as benzo condensed rings (for example, a quinolyl group, a benzo imidazolyl group, a benzothiazolyl group, and a benzoxazolyl group or the like). Preferable examples of the substituted or unsubstituted heterocyclic groups represented by R¹¹, R¹², R¹³ and R¹⁴ include a substituted or unsubstituted heterocyclic group having 6 to 10 carbon atoms.

Examples of the substitutional groups for the substituted or unsubstituted alkyl group, the substituted or unsubstituted aryl group, and the substituted or unsubstituted heterocyclic group represented by R¹¹, R¹², R¹³ and R¹⁴ of the formula (1) include a substituent group S described below.

Examples of the substitutional groups represented by S include an alkyl group (for example, methyl, ethyl, propyl, carboxymethyl, ethoxy carbonyl methyl) having 1 to 20 carbon atoms; an aralkyl group (for example, benzyl and phenethyl) having 7 to 20 carbon atoms; an alkoxy group (for example, methoxy and ethoxy) having 1 to 8 carbon atoms; an aryl group (for example, phenyl and naphthyl) having 6 to 20 carbon atoms; an aryloxy group (for example, phenoxy and naphtoxy) having 6 to 20 carbon atoms; a heterocyclic group (for example, pyridyl, pyrimidyl, pyridazyl, benzo imidazolyl, benzothiazolyl, benzoxazolyl, 2-pyrrolidone-1-yl, 2-piperidone-1-yl, 2,4-dioxyimidazolidine-3-yl, 2,4-dioxyoxazolidine-3-yl, succinimide, phthalimide, and maleimide); a halogen atom (for example, fluorine, chlorine, bromine, iodine); a carboxyl group; alkoxycarbonyl group (for example, methoxycarbonyl and ethoxycarbonyl) having 2 to 10 carbon atoms; a cyano group; an acyl group (for example, acetyl and pivaloyl) having 2 to 10 carbon atoms; a carbamoyl group (for example, carbamoyl, methyl carbamoyl, and morpholino carbamoyl) having 1 to 10 carbon atoms; an amino group, a substituted amino group (for example, dimethylamino, diethylamino, bis(methyl sulfonyl ethyl) amino, N-ethyl-N'-sulfoethylamino) having 1 to 20 carbon atoms; a sulfo group; a hydroxyl group; a nitro group; an alkyl sulfonyl amino group (for example, methyl sulfonyl amino) having 1 to 10 carbon atoms; a carbamoyl amino group (for example, carbamoyl amino and methyl carbamoyl amino) having 1 to 10 carbon atoms; a sulfonyl group (for example, methane sulfonyl and ethane sulfonyl) having 1 to 10 carbon atoms; a sulfinyl group (for example, methane sulfinyl) having 1 to 10 carbon atoms; and a sulfamoyl group (for example, sulfamoyl and methane sulfamoyl) having 0 to 10 carbon atoms. When the substitutional groups are a carboxyl group and a sulfo group, the substitutional groups may be in a salt state.

In the formula (1), R²¹, R²² and R³ each independently represent any one of a hydrogen atom, a substituted or unsubstituted alkyl group, a substituted or unsubstituted alkoxy group, a substituted or unsubstituted aryl group, a substituted or unsubstituted aryloxy group, a substituted or unsubstituted heterocyclic group, a halogen atom, a carboxyl group, a substituted or unsubstituted alkoxycarbonyl group, a cyano group, a substituted or unsubstituted acyl group, a substituted or unsubstituted carbamoyl group, an amino group, a substituted amino group, a sulfo group, a hydroxyl group, a nitro group, a substituted or unsubstituted alkyl sulfonyl amino group, a substituted or unsubstituted carbamoyl amino group, a substituted or unsubstituted alkyl sulfonyl group, a substituted or unsubstituted aryl sulfonyl group, a substituted or unsubstituted sulfinyl group, and a substituted or unsubstituted sulfamoyl group. R²¹, R²² and R³ are preferably a hydrogen atom, a substituted or unsubstituted alkyl group having 1 to 20 carbon atoms, a substituted or unsubstituted heterocyclic group having 2 to 20 carbon atoms, a substituted or unsubstituted alkoxy group having 1 to 20 carbon atoms, a substituted or unsubstituted aryl group having 6 to 20 carbon atoms, and a halogen atom. More preferred are a hydrogen atom, a substituted or unsubstituted alkyl group having 1 to 10 carbon atoms, a substituted or unsubstituted alkoxy group having 1 to 10 carbon atoms, a substituted or unsubstituted heterocyclic group having 2 to 10 carbon atoms, and a halogen atom. Most preferred are a hydrogen atom, a substituted or unsubstituted alkyl group having 1 to 5 carbon atoms, an unsubstituted alkoxy group having 1 to 5 carbon atoms, a substituted or unsubstituted heterocyclic group having 2 to 6 carbon atoms, and a halogen atom. R²¹, R²² and R³ may have further substitutional groups, and examples of the substitutional groups include substituent group S described above.

It is preferable that m is 0, and both R²¹ and R²² are a hydrogen atom. It is also preferable that m is 1, and all of R²¹, R²² and R³ are a hydrogen atom.

In the formula (1), m represents an integer of 0 or more, preferably an integer of 0 to 5, more preferably an integer of 0 to 3, and particularly preferably an integer of 0 to 2.

When the m is 2 or more in formula (1), plural R³s may be same or different, and each independently represent a hydrogen atom or the above substituent.

In the formula (1), Z^{x+} represents a cation; and x represents an integer of 1 or more.

The cation represented by Z^{x+} is preferably a quaternary ammonium ion, and more preferably 4,4'-bipyridinium cation represented by the formula ( I-4) described in JP-A No. 2000-52658, and 4,4'-bipyridinium cation disklosed in JP-A No. 2002-59652. x is preferably 1 or 2 in the formula (1).

Though the preferred specific examples of the compounds represented by the formula (1) include the following, the invention is not limited thereto.

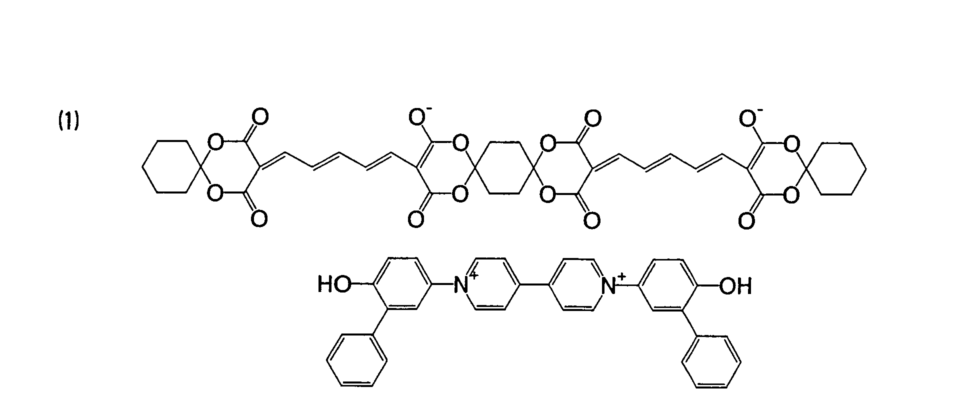

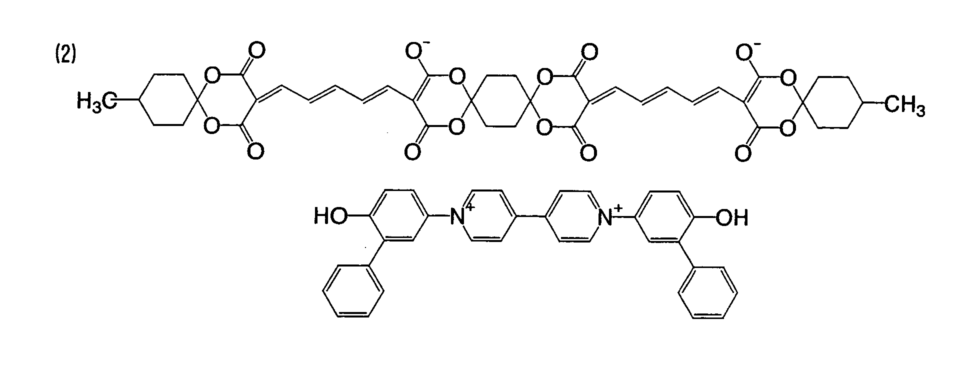

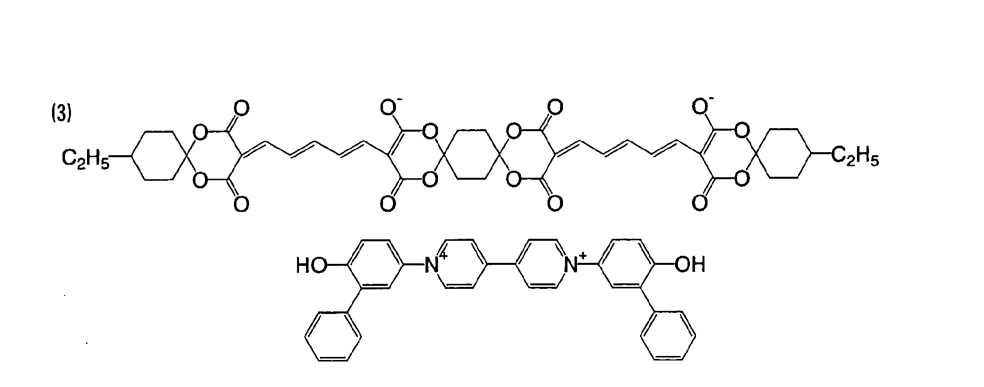

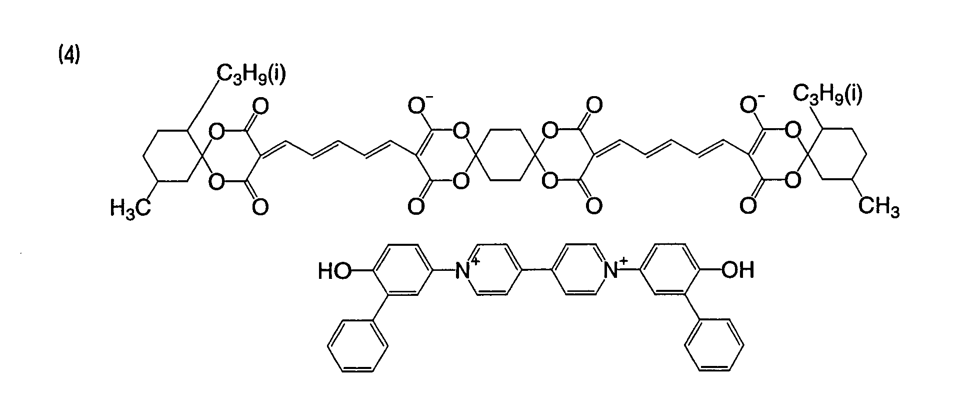

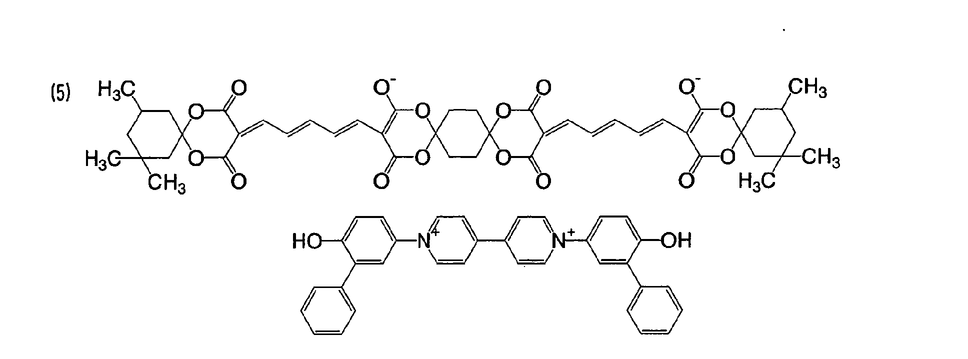

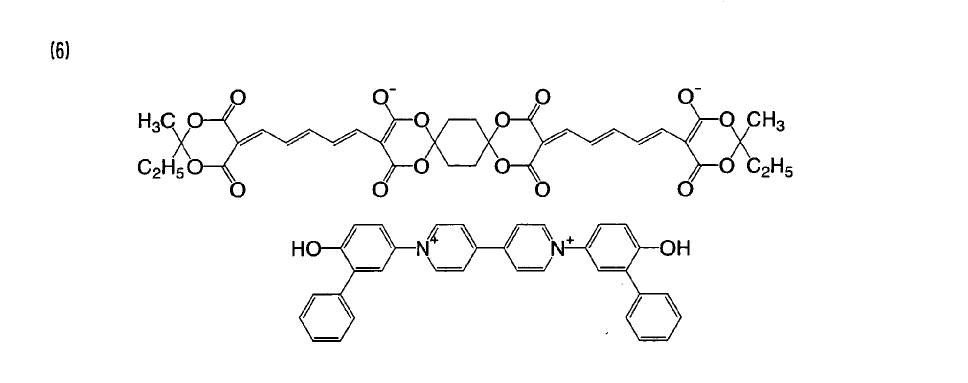

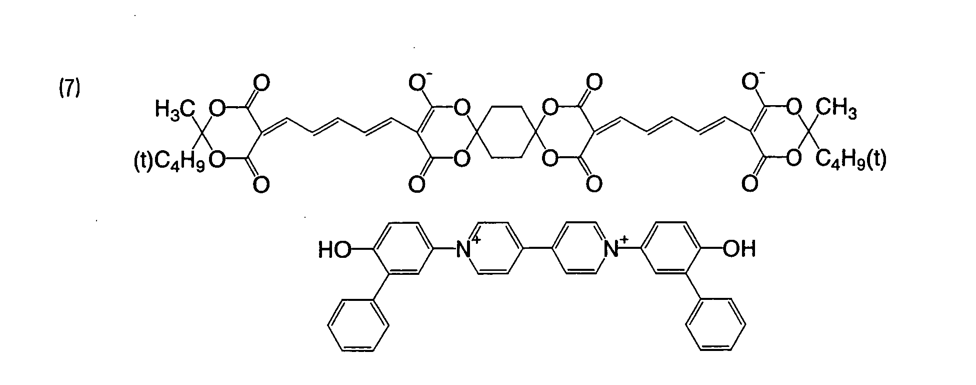

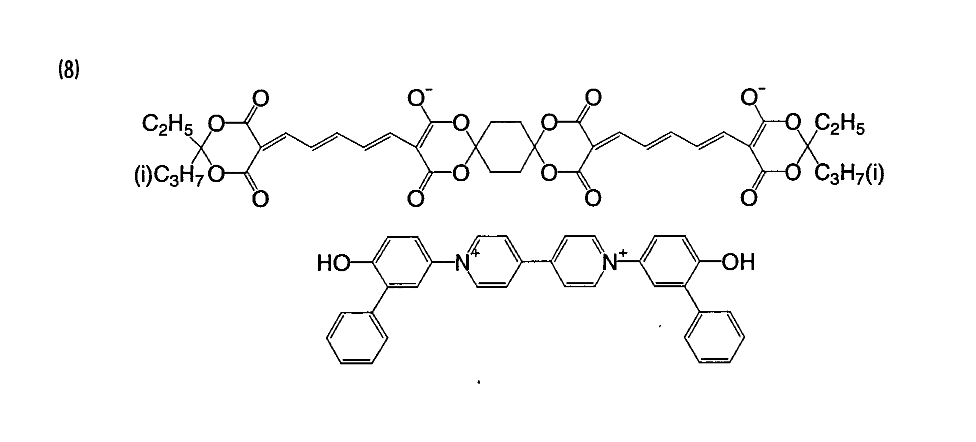

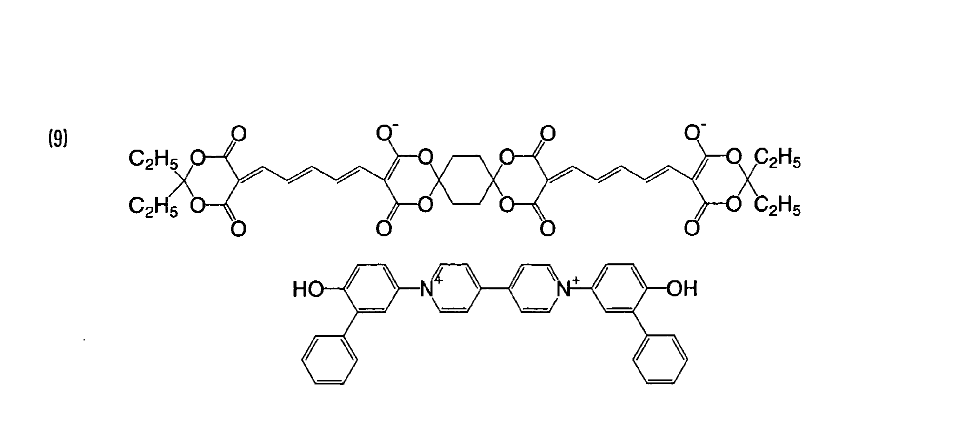

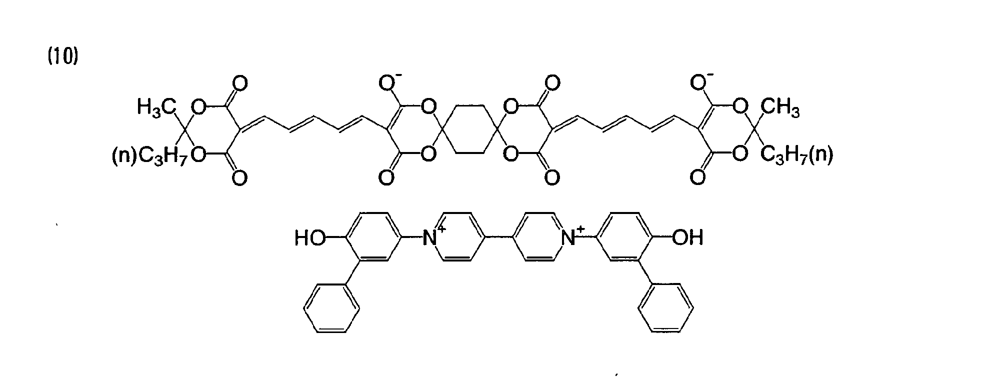

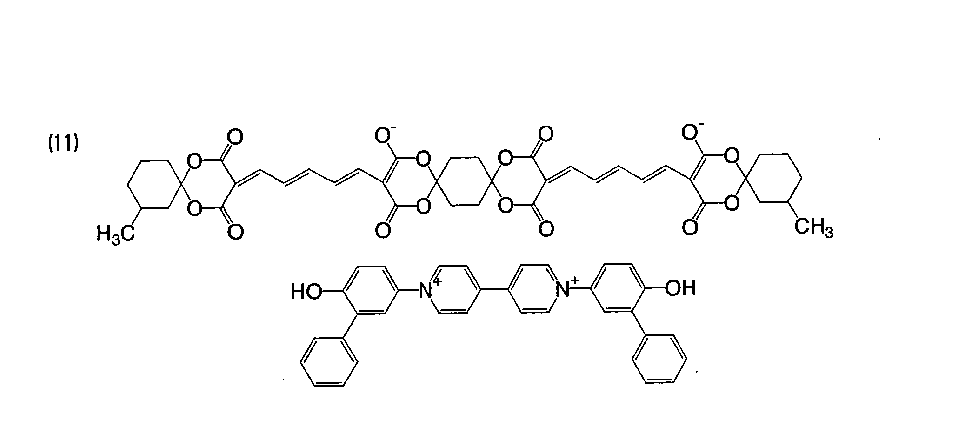

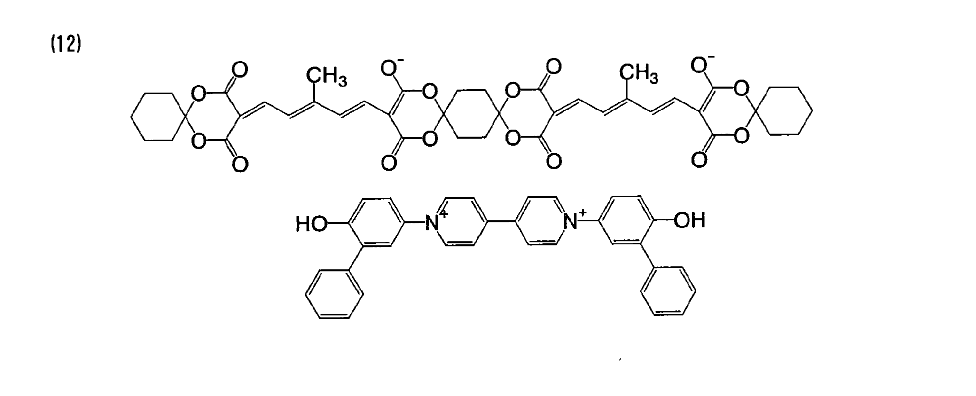

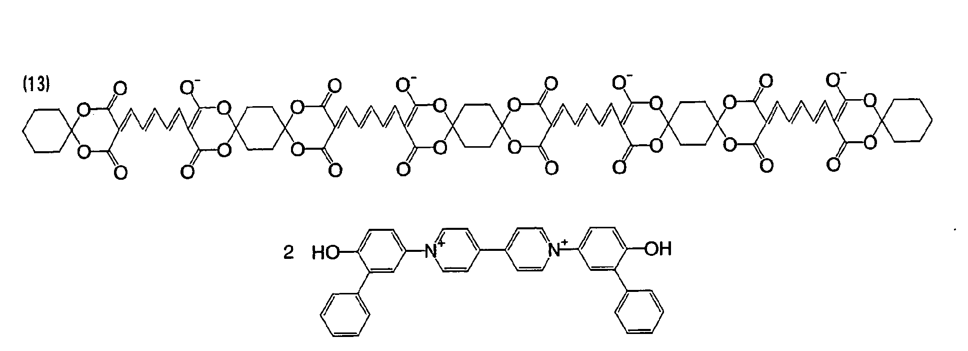

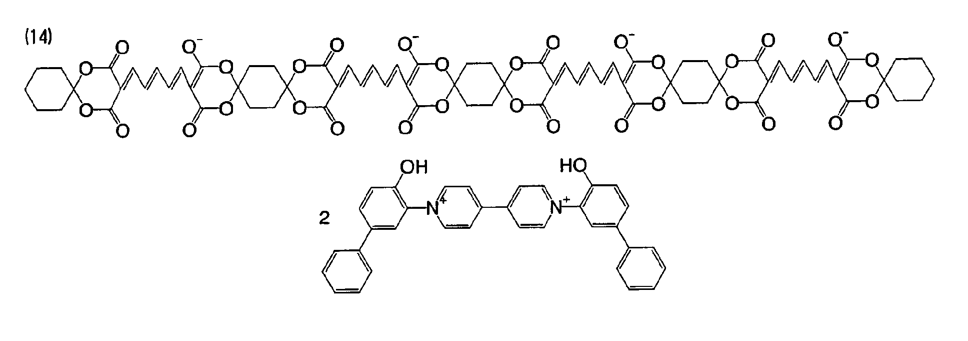

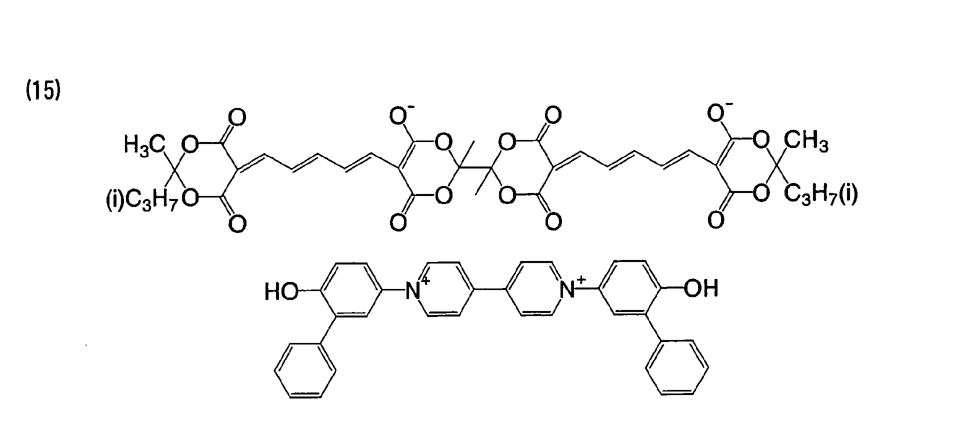

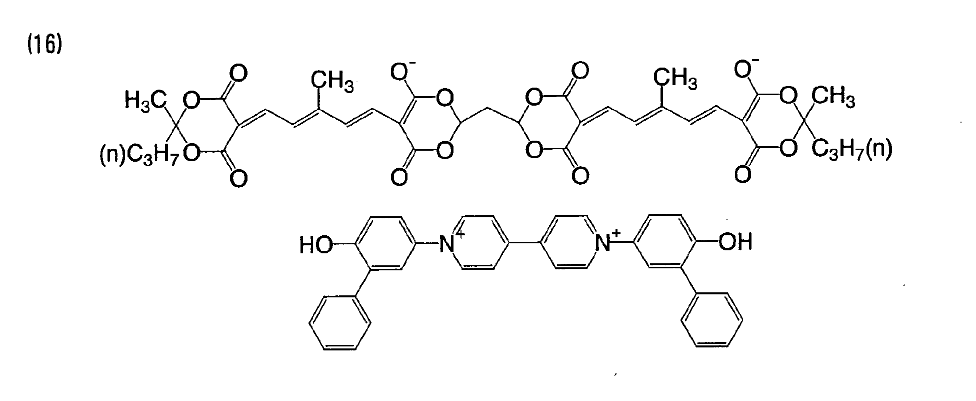

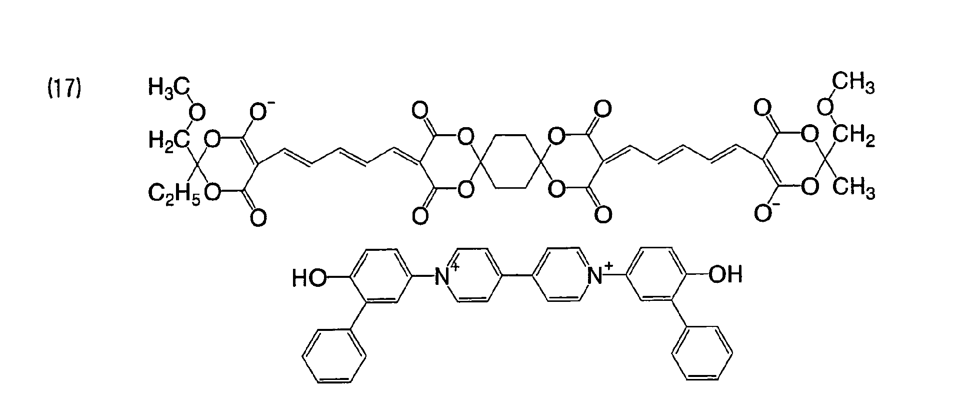

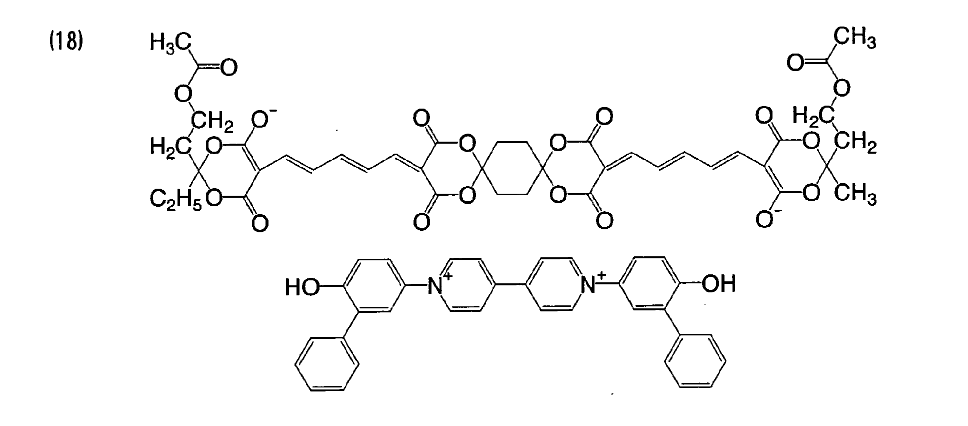

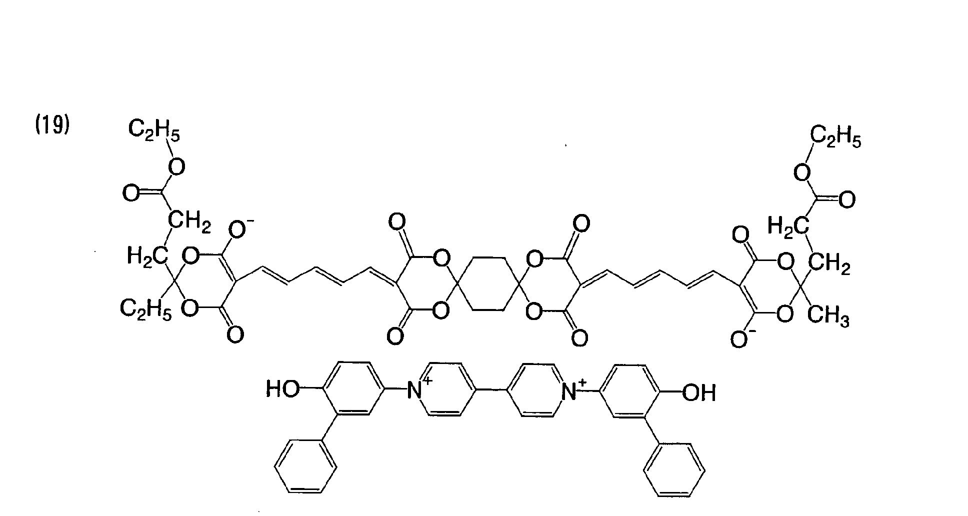

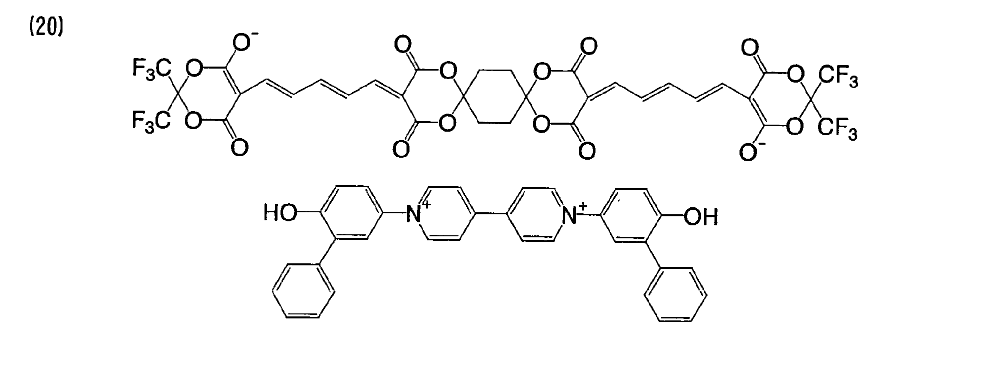

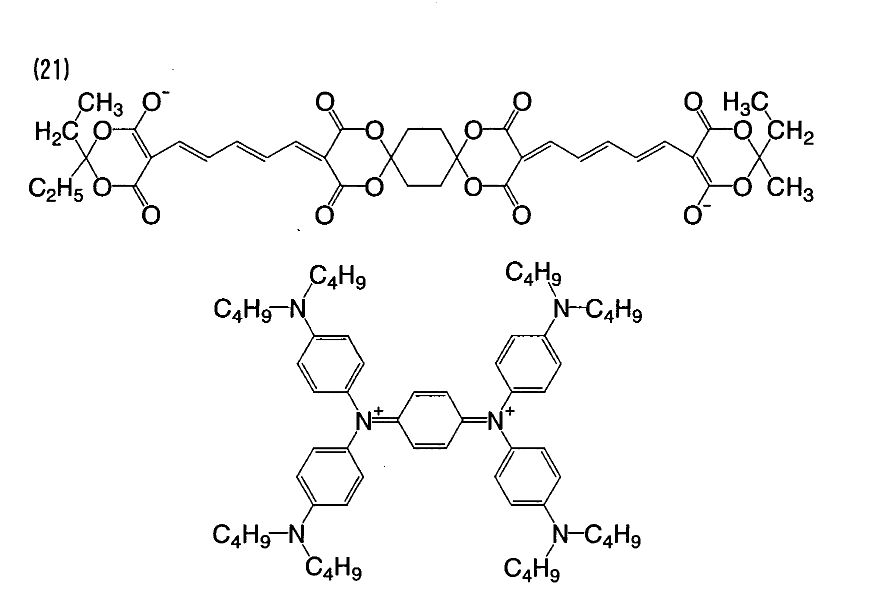

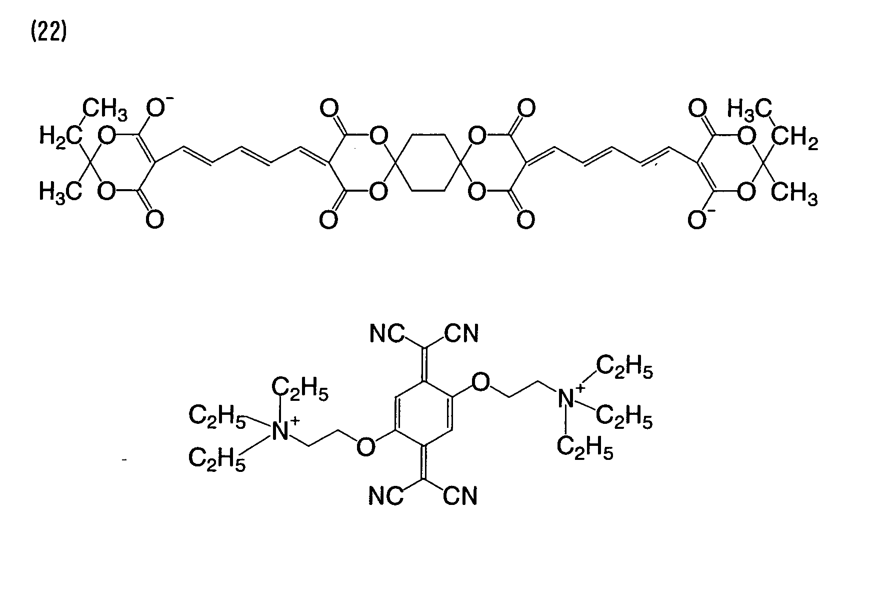

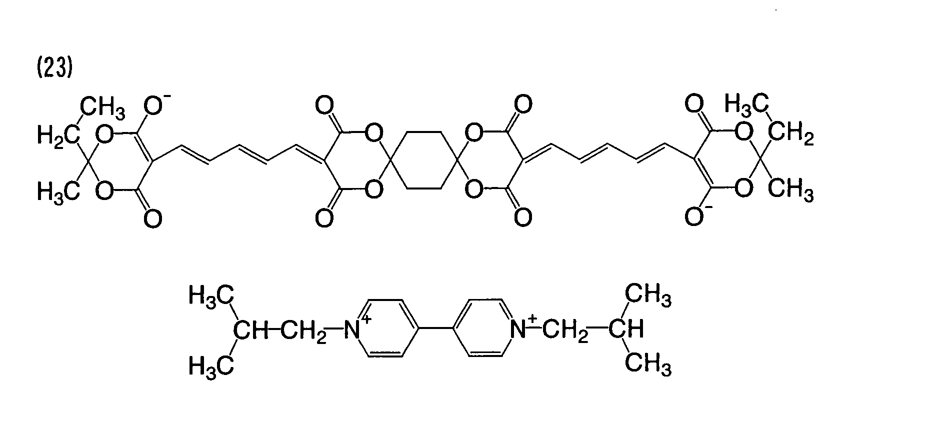

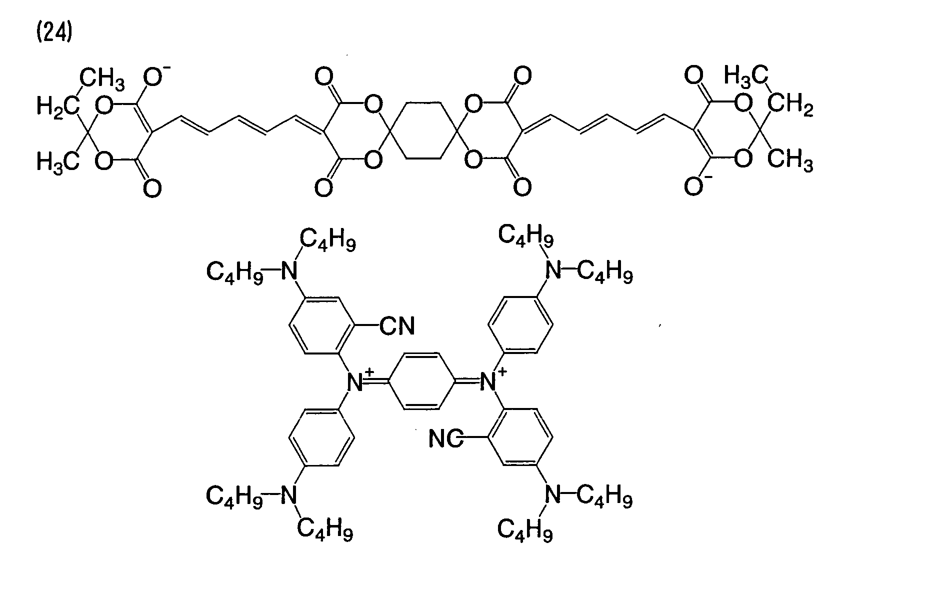

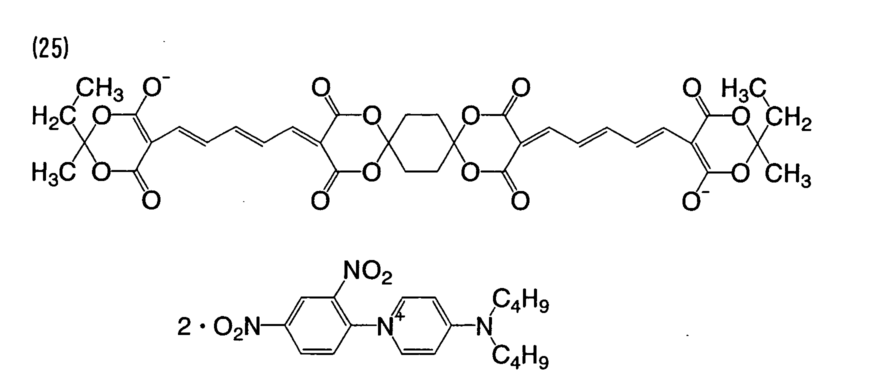

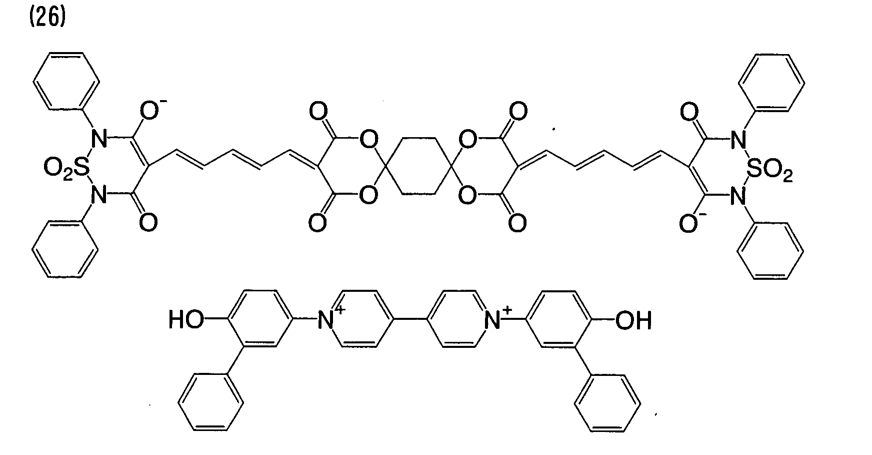

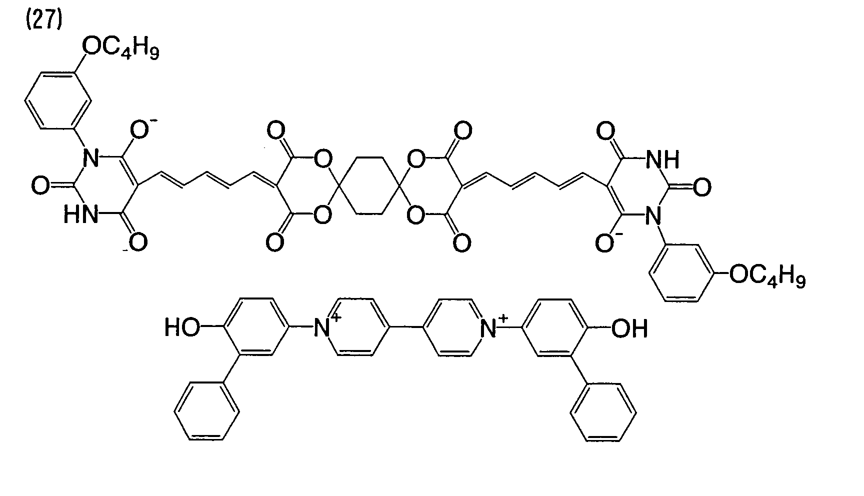

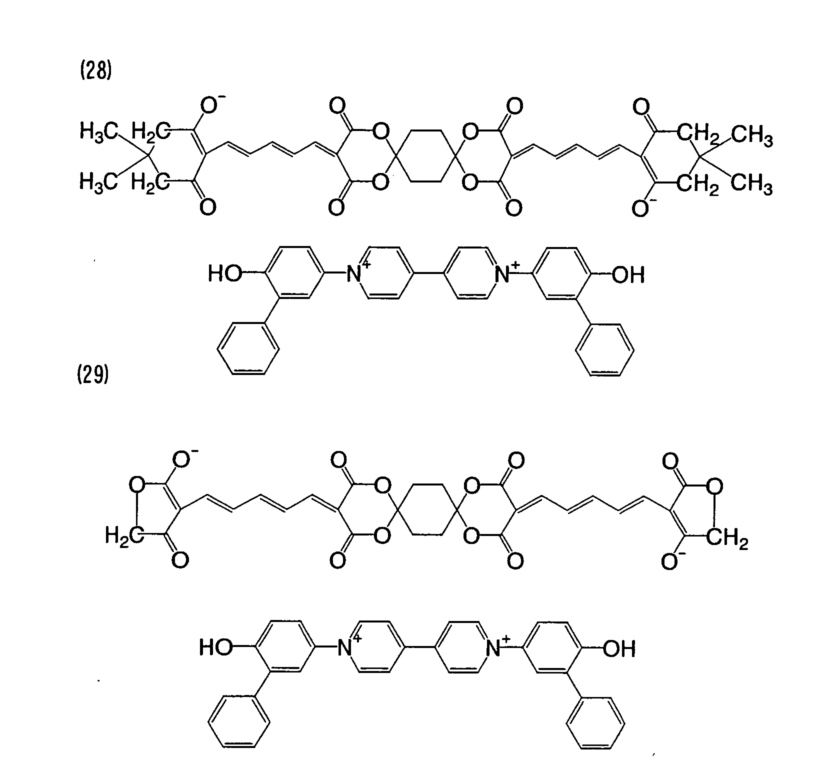

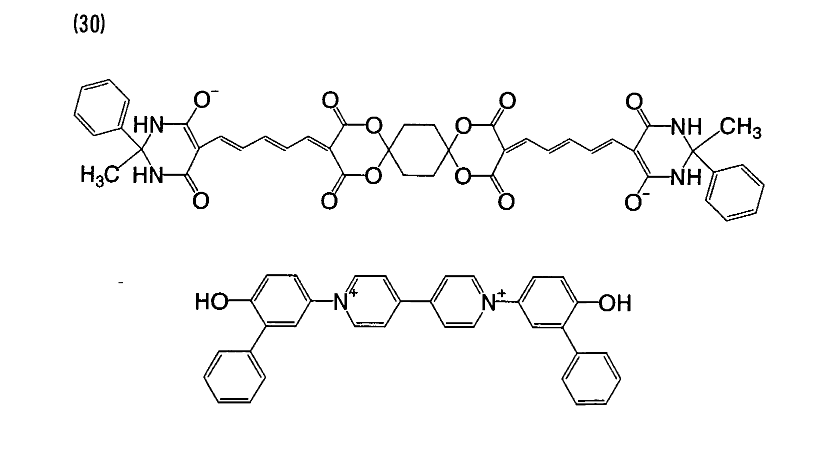

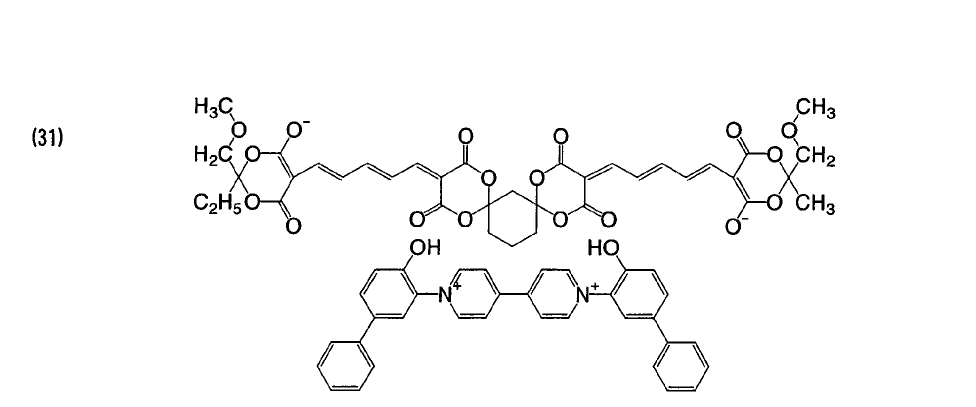

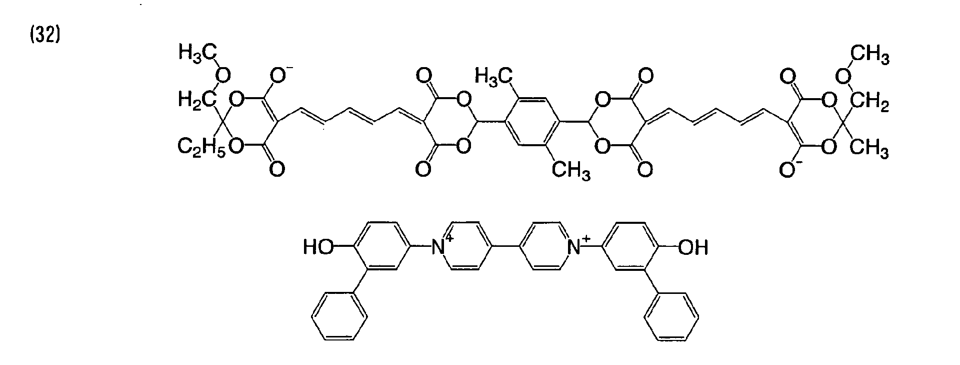

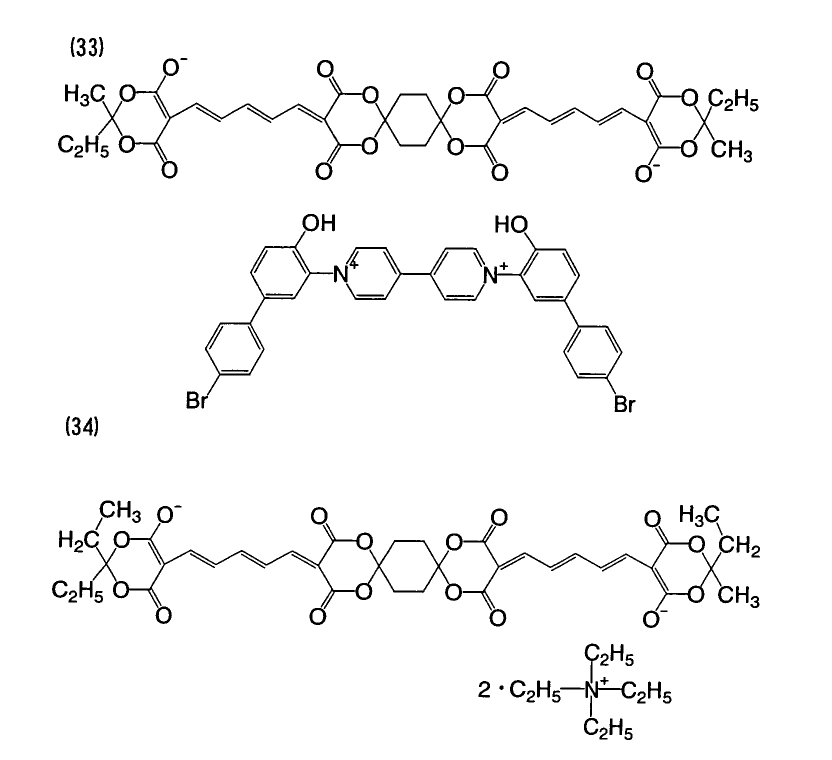

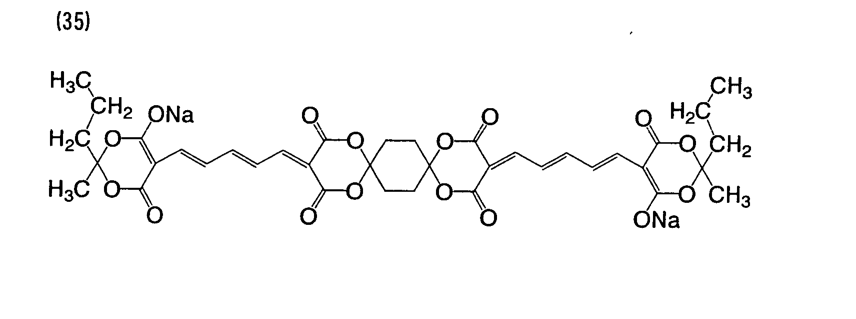

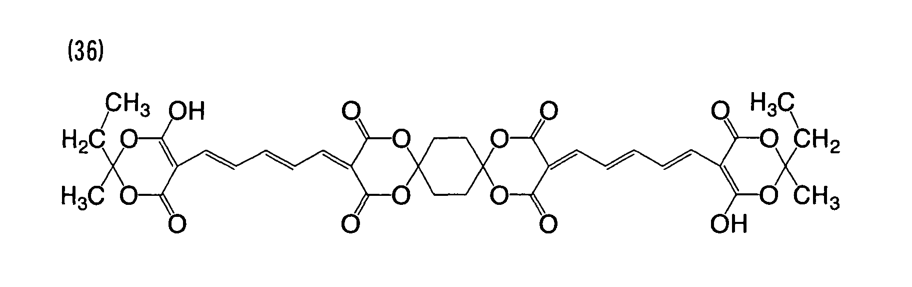

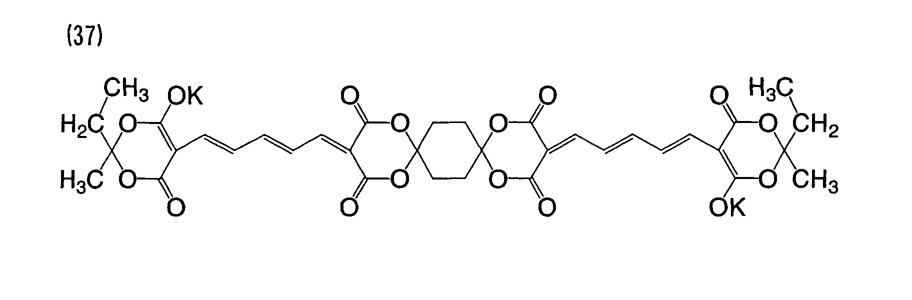

As the dye contained in the recording layer, the dimer type oxanol dye and a dye (hereinafter referred to as "long wave dye") having longer maximum absorption wavelength than that of the dimer type oxanol dye are preferably mixed and used. The recording sensitivity can be improved by mixing the dimer type oxanol dye with the long wave dye.

Examples of the long wave dyes include a cyanine dye, a phthalocyanine dye, an imidazoquinoxaline dye, a pyrylium/thiopyrylium dye, an azulenium dye, a squarylium dye, an oxonol dye, a metal (e.g. Ni, Cr) complex salt dye, a naphthoquinone dye, an anthraquinone dye, an indophenol dye, an indoaniline dye, a triphenylmethane dye, a merocyanine dye, an oxonol dye, an aminium/diimmonium dye and a nitroso compound. Among these dyes, an oxonol dye is preferable.

When the dimer type oxanol dye and the long wave dye are mixed and used, the mixture ratio of the dimer type oxanol dye (A) and the long wave dye (B) (A : B (mass ratio)) is preferably 60:40 to 99:1, and more preferably 70:30 to 98:2.

In the invention, a relationship of W>A is satisfied, when W represents a half value width of the grooves and A represents a size of the void of the recording pit in a radial direction of the optical recording medium. When the optical recording medium satisfies the relation W > A, the interference of the recording pit to the adjoining grooves can be prevented, and the generation of noise or the like can be prevented.

The satisfaction of the condition of W > A can be achieved by using aforementioned "a dye which has a small calorific value generates a gas at the time of decomposition (specifically, a dye contains no substituent having large calorific value such as a nitro group and no perchlorate ion or the like)", and setting the thickness of the recording layer in the groove portion to 50 to 150 nm.

In the optical recording medium of the invention, information is preferably recorded such that the track pitch of the groove is in the range of from 0.4 to 0.9 µm, and the minimum pit length of the recording pit (the length of the pit in the circumferential direction) is 0.5 µm or less. The information can be recorded with higher density by satisfying the condition. The track pitch is more preferably in the range of from 0.45 to 0.85 µm, and still more preferably 0.5 to 0. 8 µm. The recording pit is more preferably in the range of from 0.25 to 0.48 µm, and still more preferably 0.35 to 0.45 µm.

### EXAMPLES

The present invention will be explained in further detail below by way of examples. However, the invention is not limited by the following examples.

### Example 1

By injection molding, a polycarbonate resin was formed into a substrate having a thickness of 0.6 mm and a diameter of 120 mm and having a spiral groove (depth: 130 nm, width: 300 nm, track pitch: 0.74 µm). A coating solution was prepared by dissolving 1.0 g of the following dye A and 0.5 g of the following dye B in 100 ml of 2,2,3,3-tetrafluoropropanol. The coating solution was coated by a spin coating met on a surface of the substrate on which grooves were formed hod to form a recording layer. Then, a reflecting layer having thickness of about 150 nm was formed on the recording layer by sputtering silver. Thereafter, the substrate and a dummy substrate were bonded to each other using an ultraviolet-curable resin as an adhesive to prepare an optical disk (optical recording medium).

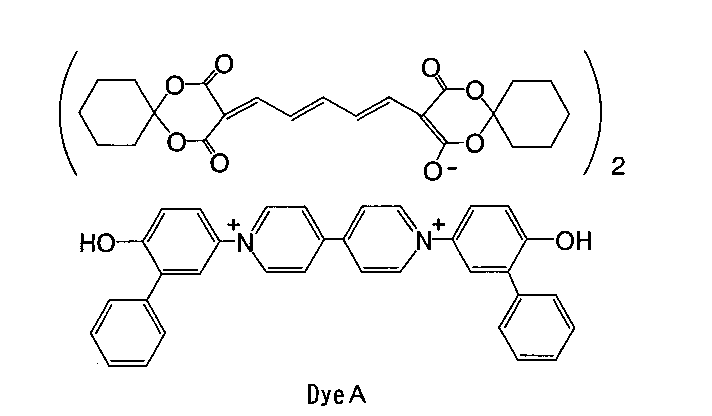

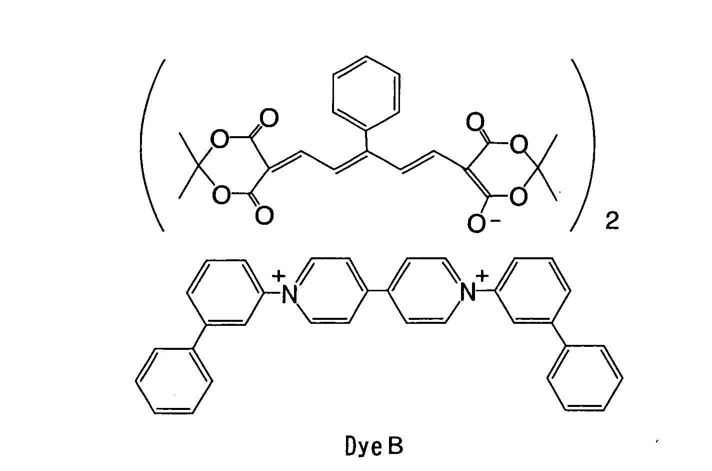

### Example 2

By injection molding, a polycarbonate resin was formed into a substrate having a thickness of 0.6 mm and a diameter of 120 mm and having a spiral groove (depth: 120 nm, width: 300 nm, track pitch: 0.74µm). A coating solution was prepared by dissolving 0.1875 g of the dye B and 1.0625 g of the following dye C in 100 ml of 2,2,3,3-tetrafluoropropanol. The coating solution was coated by a spin coating method on a surface of the substrate on which groove was formed to form a recording layer. Then, a reflecting layer having thickness of about 120 nm was formed on the recording layer by sputtering silver. Thereafter, the substrate and a dummy substrate were bonded to each other using a UV-curable resin as a adhesive to prepare an optical disk (optical recording medium).

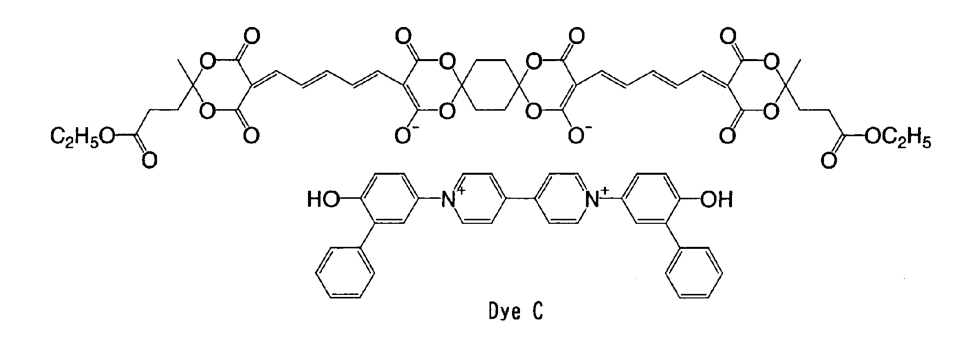

### Example 3

An optical disk was prepared in the same way as in Example 2 except that the following dye D was used in place of the dye C.

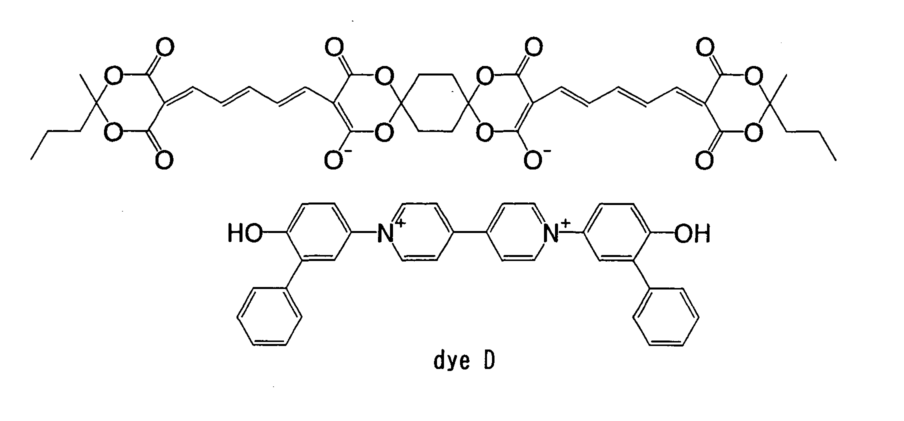

### Comparative Example 1

An optical disk of Comparative Example 1 was prepared in the same way as in Example 1 except in that a coating solution was prepared by using the following dye E in place of the dye A and the dye B and the recording layer was formed by using the coating solution.

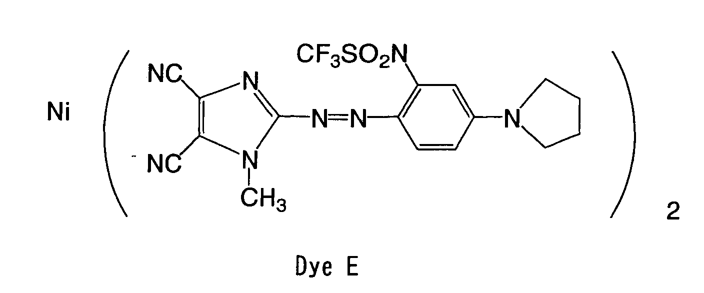

### Evaluation

### (Evaluation of Optical Recording Medium)

An 8-16 modulation signal was recorded at a linear velocity shown in Table 1 within a transfer rate range of 44 to 89 Mbps by using a disk driving device (trade name: DDU-1000, manufactured by PULSETEC INDUSTRIAL CO., LTD., laser wavelength: 660 nm, numerical aperture rate: 0.60). The recording power was set so as to minimize the jitter in each optical recording medium. Then, the recorded information was reproduced by using a laser having the same wavelength as that of the recording laser, and the jitter was measured. The results are shown in table 1.

Moreover, an 8-16 modulation signal was recorded at 3.49 m/s of a linear velocity and 11.08 Mbps of a transfer rate by using the disk driving device and a recording sensitivity (mW) and 14T modulation degree were measured at that time. The results are shown in table 2.

### (Cross-Sectional Analysis of Recording Pit Portion)

After information was recorded by a disk driving device (trade name: DDU-1000), the recorded portion was subjected to FIB (Focused Ion Bean System) processing. Then the cross-sectional shape was observed by SEM, and the presence or absence of voids was confirmed. The results are shown in table 1.

### (Substrate Transformation Analysis of Recording Pit Portion)

The substrate of the recorded optical recording medium was peeled off, and the dye adhered to the substrate was washed off using a solvent. The maximum height and maximum depth of the substrate transformation were then measured using an atomic force microscope (AFM). As the solvent for washing, 2,2,3,3-tetrafluoropropanol was used. As the AFM, an SPA-500 (trade name, manufactured by Seiko Instruments Inc.) was used. As a probe, an NCH-10V (trade name, manufactured by Veeco Instruments.) was used. The results are shown in Table 1.

**Table 1**

| | Example 1 | | Example 2 | | Example 3 | | Comparative Example 1 | |
|---|---|---|---|---|---|---|---|---|
| Transfer rate (Mbps) | 44 | 89 | 44 | 89 | 44 | 89 | 44 | 89 |
| Linear velocity (m/s) | 14 | 28 | 14 | 28 | 14 | 28 | 14 | 28 |
| Jitter | 7.8 | 7.6 | 6.5 | 6.3 | 6.4 | 6.5 | 8.3 | 9.0 |
| Substrate transformation (nm) | 5 | 9 | 3 | 5 | 3 | 5 | 20 | 22 |
| Void | present | present | present | present | present | present | absent | absent |

**Table 2**

| | Example 1 | Example 2 | Example 3 | Comparative Example 1 |
|---|---|---|---|---|
| Recording sensitivity (mW) | 8.0 | 8.0 | 8.0 | 8.4 |
| Jitter | 7.8 | 7.9 | 7.9 | 8.2 |
| 14T modulation degree | 0.52 | 0.58 | 0.58 | 0.56 |

Table 1 shows that the substrates of Examples 1 to 3 were transformed such that the maximum height (maximum depth) of a convex portion (concave portion) was 3nm or more and 15nm or less at either of recording speeds having linear velocity of 14m/s (44Mbps) and 28m/s (89Mbps), and that the jitter of the optical recording mediums of Examples 1 to 3, in which the void was generated, was smaller than that of Comparative Example 1. That is, the optical recording medium of the invention can obtain satisfactory jitter even during high speed recording.

As shown in Table 2, during the low speed recording at a linear velocity of 3.49m/ s, as well the optical recording mediums of Examples 1 to 3 provided excellent results with respect to each of sensitivity, jitter and modulation degree compared with Comparative Example 1.

## Claims

1. An optical recording medium comprising:
a substrate having a surface on which one or more grooves are concentrically or spirally formed; and
a recording layer which is formed on the surface of the substrate and contains a dye, the recording layer being irradiated with a laser beam to record or reproduce information, wherein
a region of the substrate corresponding to a recording pit forming region is transformed into a convex form or a concave form by irradiating the recording layer with the laser beam to form the recording pit at the time of recording the information,
a maximum height of a convex portion is in the range of from 3 nm to 15 nm or a maximum depth of a concave portion is in the range of from 3 nm to 15 nm, and
a void is generated in the recording pit forming region of the recording layer.

2. The optical recording medium of claim 1, wherein a relationship of W>A is satisfied, when W represents a half value width of the grooves and A represents a size of the void of the recording pit in a radial direction of the optical recording medium.

3. The optical recording medium of claim 1 or 2, wherein a track pitch of the grooves is in the range of from 0.4 to 0.9 µm, and a minimum pit length of the recording pit is 0.5 µm or less.

4. The optical recording medium of any one of claims 1 to 3, wherein a dimer type oxanol dye is used as the dye contained the recording layer.

5. The optical recording medium of claim 4, wherein the dimer type oxanol dye is a compound represented by the following formula (1): 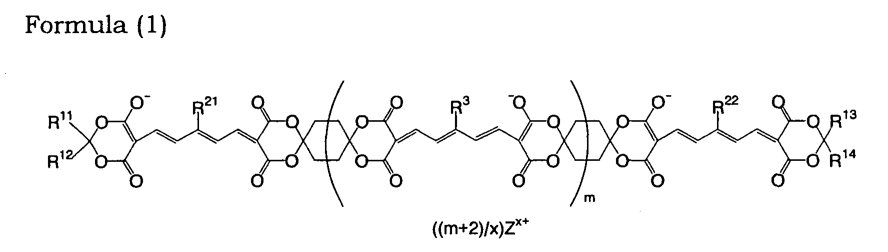 wherein, R¹¹, R¹², R¹³ and R¹⁴ each independently represent any one of a hydrogen atom, a substituted or unsubstituted alkyl group, a substituted or unsubstituted aryl group, and a substituted or unsubstituted heterocyclic group; R²¹, R²² and R³ each independently represent any one of a hydrogen atom, a substituted or unsubstituted alkyl group, a substituted or unsubstituted alkoxy group, a substituted or unsubstituted aryl group, a substituted or unsubstituted aryloxy group, a substituted or unsubstituted heterocyclic group, a halogen atom, a carboxyl group, a substituted or unsubstituted alkoxycarbonyl group, a cyano group, a substituted or unsubstituted acyl group, a substituted or unsubstituted carbamoyl group, an amino group, a substituted amino group, a sulfo group, a hydroxyl group, a nitro group, a substituted or unsubstituted alkyl sulfonyl amino group, a substituted or unsubstituted aryl sulfonyl amino group, a substituted or unsubstituted carbamoyl amino group, a substituted or unsubstituted alkyl sulfonyl group, a substituted or unsubstituted aryl sulfonyl group, a substituted or unsubstituted alkyl sulfinyl group, a substituted or unsubstituted aryl sulfinyl group, and a substituted or unsubstituted sulfamoyl group; m represents an integer of 0 or more; when m is 2 or more, plural R³s may be same or different; Z^{x+} represents a cation; and x represents an integer of 1 or more.

6. The optical recording medium of claim 4 or 5, wherein the dimer type oxanol dye and a dye having longer maximum absorption wavelength than that of the dimer type oxanol dye are mixed and used as the dye contained in the recording layer.

7. The optical recording medium of any one of claims 1 to 6, wherein the maximum height of the convex portion or the maximum depth of the concave portion is in the range of from 5 nm to 10 nm.

8. The optical recording medium of any one of claims 1 to 7, wherein a thickness of the recording layer on the grooves of the substrate is in the range of from 50 to 150 nm.

9. The optical recording medium of any one of claims 1 to 8, wherein the dye has a small a calorific value and generates gas at the time of decomposition.

10. The optical recording medium of any one of claims 1 to 9, wherein a depth of the grooves of the substrate is in the range of from 50 to 150 nm.

11. The optical recording medium of any one of claims 1 to 10, wherein a half value width of the grooves of the substrate is in the range of from 200 to 400 nm.

12. The optical recording medium of any one of claims 1 to 11, wherein a reflective layer is disposed on the recording layer.
